# EUROPEAN PATENT APPLICATION

(11) **EP 4 765 937 A1**
(43) Date of publication of application: **24.06.2026**
(21) Application number: 23949324.0
(22) Date of filing: 18.08.2023
(51) Int. Cl.: H04W 24/10

(54) **SENSING MEASUREMENT METHODS, DEVICES AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/113858
(87) International publication number: WO 2025/039130

(57) **Abstract**

The embodiments of the present disclosure relate to the technical field of communications. Provided are sensing measurement methods, devices and a storage medium. A method comprises: in a polling phase, determining and sending a sensing polling trigger frame; and, if a CTS-to-self frame sent by a sensing-by-proxy initiating device is not received, resuming execution of a trigger-based sensing measurement. In the embodiments of the present disclosure, there can be provided a processing mode of the sensing-by-proxy initiating device when the CTS-to-self frame sent by the sensing-by-proxy initiating device is not received in the polling stage.

## Description

### TECHNICAL FIELD

The present disclosure relates to the technical field of communication, and in particular, to sensing measurement methods, devices, and a storage medium.

### BACKGROUND

During the WLAN Sensing procedure, to reduce spectrum resource waste and transmission latency, a WLAN sensing measurement method using an AP to proxy for an STA, i.e., sensing by proxy (SBP) measurement, is proposed for communication scenarios with strict latency requirements. Specifically, the STA serves as a sensing by proxy initiator to send an SBP Request frame to the AP (sensing by proxy responder), so that the AP, as a sensing measurement initiator, initiates a trigger-based sensing measurement.

During the polling phase prior to initiating the trigger-based sensing measurement, the AP needs to poll the STA through a Sensing Polling Trigger frame, so that the STA (sensing by proxy initiator) may indicate its ability to participate in the sensing measurement or receive the sensing by proxy measurement result via a CTS-to-self frame. However, the operation mode of the AP when it does not receive the CTS-to-self frame sent by the STA (sensing by proxy initiator) will be further studied to improve the relevant procedures of sensing by proxy measurement.

### SUMMARY

The embodiments of the present disclosure provide sensing measurement methods, devices, and a storage medium, which can provide an operation mode for the sensing by proxy responder when it does not receive the CTS-to-self frame sent by the sensing by proxy initiator during the polling phase.

In a first aspect, an embodiment of the present disclosure provides a sensing measurement method, and the method includes:
determining and sending a sensing polling trigger frame during a polling phase; and
if a CTS-to-self frame sent by a sensing by proxy initiator is not received, proceeding to perform a trigger-based sensing measurement.

In a second aspect, an embodiment of the present disclosure provides a sensing measurement method, and the method includes:
if a first wireless frame sent by a sensing by proxy responder is received, determining whether to receive a sensing by proxy report frame sent by the sensing by proxy responder, wherein the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by a sensing by proxy initiator during a sensing polling phase.

In a third aspect, an embodiment of the present disclosure provides a sensing by proxy responder, including:
a transceiver module, configured to determine and send a sensing polling trigger frame during a polling phase; and
a processing module, configured to proceed to perform a trigger-based sensing measurement if a CTS-to-self frame sent by a sensing by proxy initiator is not received.

In a fourth aspect, an embodiment of the present disclosure provides a sensing by proxy initiator, including:
a processing module, configured to determine whether to receive a sensing by proxy report frame sent by a sensing by proxy responder if a first wireless frame sent by the sensing by proxy responder is received, wherein the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by the sensing by proxy initiator during a sensing polling phase.

In a fifth aspect, an embodiment of the present disclosure provides a sensing by proxy responder, including one or more processors;
where the sensing by proxy responder is configured to perform the sensing measurement method provided in the first aspect of the embodiments of the present disclosure.

In a sixth aspect, an embodiment of the present disclosure provides a sensing by proxy initiator, including one or more processors;
where the sensing by proxy initiator is configured to perform the sensing measurement method provided in the second aspect of the embodiments of the present disclosure.

In a seventh aspect, an embodiment of the present disclosure provides a storage medium, where the storage medium stores instructions that, when executed on a communication device, cause the communication device to perform the sensing measurement method provided in the first aspect of the embodiments of the present disclosure.

In an eighth aspect, an embodiment of the present disclosure provides a communication system, where the communication system includes a sensing by proxy initiator and a sensing by proxy responder, the sensing by proxy responder is configured to execute the method described in the first aspect, and the sensing by proxy initiator is configured to execute the method described in the second aspect.

Based on the sensing measurement method, device, and storage medium provided by the embodiments of the present disclosure, the processing procedure of sensing by proxy measurement can be improved.

Additional aspects and advantages of the embodiments of the present disclosure will be partially provided in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the accompanying drawings that are to be used in the description of the embodiments of the present disclosure are briefly introduced below. Obviously, the drawings in the following description are only some embodiments of the present disclosure, and those of ordinary skill in the art may obtain other drawings based on these drawings without paying creative effort.
FIG. 1 is a schematic diagram of an architecture of WLA sensing measurement provided by an embodiment of the present disclosure;
FIG. 2 is a schematic diagram of a communication connection provided by an embodiment of the present disclosure;
FIG. 3 is a schematic diagram of another architecture of WLA sensing measurement provided by an embodiment of the present disclosure;
FIG. 4 is a schematic diagram of an architecture of a communication system according to an embodiment of the present disclosure;
FIG. 5 is a schematic interaction diagram of a sensing measurement method according to an embodiment of the present disclosure;
FIG. 6 is a first flow chart of a sensing measurement method according to an embodiment of the present disclosure;
FIG. 7 is a second flow chart of a sensing measurement method according to an embodiment of the present disclosure;
FIG. 8 is a third flow chart of a sensing measurement method according to an embodiment of the present disclosure;
FIG. 9a is a schematic structural diagram of a sensing by proxy responder provided by an embodiment of the present disclosure;
FIG. 9b is a schematic structural diagram of a sensing by proxy initiator provided by an embodiment of the present disclosure;
FIG. 10 is a schematic structural diagram of a communication device provided by an embodiment of the present disclosure;
FIG. 11 is a schematic structural diagram of a chip provided by an embodiment of the present disclosure.

### DETAILED DESCRIPTION

The present disclosure provides sensing measurement methods, devices, and a storage medium.

In a first aspect, an embodiment of the present disclosure provides a sensing measurement method, where the method includes:
determining and sending a sensing polling trigger frame during a polling phase; and
if a CTS-to-self frame sent by a sensing by proxy initiator is not received, proceeding to perform a trigger-based sensing measurement.

In the above embodiments, after the sensing by proxy responder sends the sensing polling trigger frame during the polling phase, it may proceed to perform trigger-based sensing measurement even if it does not receive the CTS-to-self frame sent by the sensing by proxy initiator, which is beneficial to further improve the relevant procedures of sensing by proxy measurement.

With reference to some embodiments of the first aspect, in some embodiments, the above trigger-based sensing measurement includes at least one of a null data packet announcement (NDPA) sensing measurement or a trigger frame (TF) sensing measurement.

In the above embodiments, after the sensing by proxy responder sends the sensing polling trigger frame during the polling phase, it may proceed to perform NDPA sensing measurement and/or TF sensing measurement even if it does not receive the CTS-to-self frame sent by the sensing by proxy initiator. On the basis of completing the relevant procedures of sensing by proxy measurement, this enhances the diversity of trigger-based sensing measurement.

With reference to some embodiments of the first aspect, in some embodiments the above method further includes:
after completing the trigger-based sensing measurement, sending a first wireless frame to the sensing by proxy initiator, where the first wireless frame is used to request sending a sensing by proxy report frame;
if the CTS-to-self frame sent by the sensing by proxy initiator is not received, not sending the sensing by proxy report frame to the sensing by proxy initiator
if the CTS-to-self frame sent by the sensing by proxy initiator is received, sending the sensing by proxy report frame to the sensing by proxy initiator.

In the above embodiments, after completing the trigger-based sensing measurement, the sensing by proxy responder may send a first wireless frame to the sensing by proxy initiator to request sending the sensing by proxy report frame. Moreover, it may determine whether to send the sensing by proxy report frame to the sensing initiator based on whether it receives a CTS-to-self frame in response to the first wireless frame, thereby further improving the procedure after completing the trigger-based sensing measurement.

With reference to some embodiments of the first aspect, in some embodiments, when the trigger-based sensing measurement includes the NDPA sensing measurement, the first wireless frame is a reporting trigger frame; when the trigger-based sensing measurement comprises the TF sensing measurement, the first wireless frame is a sensing polling trigger frame or a request to send frame.

In the above embodiments, after completing the trigger-based sensing measurement, the sensing by proxy responder may request to send the sensing by proxy report frame to the sensing by proxy initiator through the existing wireless frames involved in NDPA sensing measurement or TF sensing measurement, which is beneficial to save signaling resources.

With reference to some embodiments of the first aspect, in some embodiments, the sensing polling trigger frame includes at least one of:
a device identifier of the sensing by proxy initiator; and
an uplink resource unit for sending the CTS-to-self frame.

In the above embodiments, when the sensing polling trigger frame includes the device identifier of the sensing by proxy initiator, it facilitates the sensing by proxy initiator to identify that the sensing polling trigger frame is the wireless frame it needs to receive, thereby improving the transmission efficiency of the sensing polling trigger frame. When the sensing polling trigger frame includes the uplink resource unit for sending the CTS-to-self frame, it facilitates the sensing by proxy initiator to quickly send the CTS-to-self frame and facilitates the sensing by proxy responder to quickly receive the CTS-to-self frame.

With reference to some embodiments of the first aspect, in some embodiments, the above method further includes:
sending a sensing by proxy termination frame to the sensing by proxy initiator in a case that the sensing by proxy report frame is not sent to the sensing by proxy initiator.

In the above embodiments, when the sensing by proxy responder determines not to send the sensing by proxy report frame to the sensing by proxy initiator, it may send a sensing by proxy termination frame to the sensing by proxy initiator, which helps to further complete the relevant procedures of sensing by proxy measurement.

With reference to some embodiments of the first aspect, in some embodiments, the reporting trigger frame includes a device identifier of the sensing by proxy initiator.

In the above embodiments, when the reporting trigger frame includes the device identifier of the sensing by proxy initiator, it facilitates the sensing by proxy initiator to identify that the reporting trigger frame is the wireless frame it needs to receive, thereby improving the transmission efficiency of the reporting trigger frame.

In a second aspect, an embodiment of the present disclosure provides a sensing measurement method, where the method includes:
if a first wireless frame sent by a sensing by proxy responder is received, determining whether to receive a sensing by proxy report frame sent by the sensing by proxy responder, wherein the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by a sensing by proxy initiator during a sensing polling phase.

In the above embodiment, if the sensing by proxy initiator receives the first wireless frame sent by the sensing by proxy responder after the completion of trigger-based sensing measurement, it may determine whether it is able to receive the sensing by proxy report frame, thereby further improving the execution of the subsequent procedures of trigger-based sensing measurement in the scenario where the sensing by proxy responder does not receive the CTS-to-self frame sent by the sensing by proxy initiator during the polling phase.

With reference to some embodiments of the second aspect, in some embodiments the above method further includes:
when determining to receive the sensing by proxy report frame, sending the CTS-to-self frame to the sensing by proxy responder and receiving the sensing by proxy report frame sent by the sensing by proxy responder.

In the above embodiments, if the sensing by proxy initiator receives the first wireless frame sent by the sensing by proxy responder after the completion of trigger-based sensing measurement and determines that it can receive the sensing by proxy report frame, it may respond with a CTS-to-self frame to indicate that the sensing by proxy responder may send the sensing by proxy report frame. This further improves the transmission procedure of the sensing by proxy report frame following the execution of trigger-based sensing measurement in the scenario where the sensing by proxy responder does not receive the CTS-to-self frame sent by the sensing by proxy initiator during the polling phase.

With reference to some embodiments of the second aspect, in some embodiments, the trigger-based sensing measurement includes at least one of a null data packet announcement (NDPA) sensing measurement or a trigger frame (TF) sensing measurement.

In the above embodiments, when the sensing by proxy initiator determines to receive the sensing by proxy report frame, it may receive the sensing measurement result of the NDPA sensing measurement and/or TF sensing measurement proceeded by the sensing by proxy responder, which improves the diversity of trigger-based sensing measurement.

With reference to some embodiments of the second aspect, in some embodiments, when the trigger-based sensing measurement includes the NDPA sensing measurement, the first wireless frame is a reporting trigger frame; when the trigger-based sensing measurement includes the TF sensing measurement, the first wireless frame is a sensing polling trigger frame or a request to send frame.

In the above embodiments, the sensing by proxy initiator may determine that the sensing by proxy responder requests to send the sensing by proxy report frame through the existing wireless frame involved in NDPA sensing measurement or TF sensing measurement, which helps to save signaling resources.

With reference to some embodiments of the second aspect, in some embodiments, the sensing polling trigger frame includes at least one of:
a device identifier of the sensing by proxy initiator; and
an uplink resource unit for sending the CTS-to-self frame.

In the above embodiments, when the sensing polling trigger frame includes the device identifier of the sensing by proxy initiator, it facilitates the sensing by proxy initiator to identify that the sensing polling trigger frame is the wireless frame it needs to receive, thereby improving the transmission efficiency of the sensing polling trigger frame. When the sensing polling trigger frame includes the uplink resource unit for sending the CTS-to-self frame, it facilitates the sensing by proxy initiator to quickly send the CTS-to-self frame and facilitates the sensing by proxy responder to quickly receive the CTS-to-self frame.

With reference to some embodiments of the second aspect, in some embodiments, the above method further includes:
receiving a sensing by proxy termination frame sent by the sensing by proxy responder when the sensing by proxy responder determines not to send the sensing by proxy report frame.

In the above embodiments, the sensing by proxy initiator may receive the sensing by proxy termination frame sent by the sensing by proxy responder when the latter determines not to send the sensing by proxy report frame to the sensing by proxy initiator, which is beneficial to further complete the relevant procedures of sensing by proxy measurement.

With reference to some embodiments of the second aspect, in some embodiments, the reporting trigger frame includes a device identifier of the sensing by proxy initiator.
In a third aspect, an embodiment of the present disclosure provides a sensing by proxy responder, including:
a transceiver module, configured to determine and send a sensing polling trigger frame during a polling phase; and
a processing module, configured to proceed to perform a trigger-based sensing measurement if a CTS-to-self frame sent by a sensing by proxy initiator is not received.

In a fourth aspect, an embodiment of the present disclosure provides a sensing by proxy initiator, including:
a processing module, configured to determine whether to receive a sensing by proxy report frame sent by a sensing by proxy responder if a first wireless frame sent by the sensing by proxy responder is received, where the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by the sensing by proxy initiator during a sensing polling phase.

In a fifth aspect, an embodiment of the present disclosure provides a sensing by proxy responder, including one or more processors;
where the sensing by proxy responder is configured to perform the sensing measurement method provided in the first aspect and the optional implementations of the first aspect.

In a sixth aspect, an embodiment of the present disclosure provides a sensing by proxy initiator, including one or more processors;
where the sensing by proxy initiator is configured to perform the sensing measurement method provided in the second aspect and the optional implementations of the second aspect.

In a seventh aspect, an embodiment of the present disclosure provides a storage medium having instructions stored thereon, which, when executed on a communication device, cause the communication device to perform the methods described in the first aspect, the second aspect, the optional implementations of the first aspect, and the optional implementations of the second aspect.

In an eighth aspect, an embodiment of the present disclosure provides a program product, which, when executed by a communication device, causes the communication device to perform the methods described in the first aspect, the second aspect, the optional implementations of the first aspect, and the optional implementations of the second aspect.

In a ninth aspect, an embodiment of the present disclosure provides a computer program which, when run on a computer, causes the computer to perform the methods described in the first aspect, the second aspect, the optional implementations of the first aspect, and the optional implementations of the second aspect.

In a tenth aspect, an embodiment of the present disclosure provides a chip or chip system. The chip or chip system includes a processing circuit, which is configured to perform the methods described in the first aspect, the second aspect, the optional implementations of the first aspect, and the optional implementations of the second aspect.

In an eleventh aspect, an embodiment of the present disclosure provides a communication system, where the communication system includes a sensing by proxy initiator and a sensing by proxy responder; where the sensing by proxy responder is configured to perform the methods described in the first aspect and the optional implementations of the first aspect, and the sensing by proxy initiator is configured to perform the methods described in the second aspect and the optional implementations of the second aspect.

It is to be understood that the aforementioned communication apparatus, sensing by proxy responder, sensing by proxy initiator, communication system, storage medium, program product, computer program, and chip or chip system are all configured to perform the methods proposed in the embodiments of the present disclosure. Therefore, for the beneficial effects they can achieve, reference may be made to the beneficial effects in the corresponding methods, which will not be repeated herein.

Embodiments of the present disclosure provide sensing measurement methods, devices, and a storage medium. In some embodiments, the terms "sensing measurement method", "information processing method", etc., may be used interchangeably, the terms "communication apparatus", "information processing apparatus", etc., may be used interchangeably, and the terms "information processing system", "communication system", etc., may be used interchangeably.

The embodiments of the present disclosure are not exhaustive and are merely illustrative of some embodiments, and are not intended to impose specific limitations on the protection scope of the present disclosure. In the absence of contradiction, each step in a certain embodiment may be implemented as an independent embodiment, and the steps may be arbitrarily combined. For example, a solution with some steps removed from a certain embodiment may also be implemented as an independent embodiment, and the order of the steps in a certain embodiment may be arbitrarily exchanged. In addition, the optional implementation manners in a certain embodiment may be arbitrarily combined. In addition, the various embodiments may be arbitrarily combined. For example, some or all steps of different embodiments may be arbitrarily combined, and a certain embodiment may be arbitrarily combined with the optional implementation manners of other embodiments.

In various embodiments of the present disclosure, unless otherwise specified or existing logical contradictions, the terms and/or descriptions between the various embodiments are consistent and can be referred to each other. The technical features in different embodiments can be combined to form new embodiments according to their inherent logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "the above-mentioned", "said", "the aforesaid", "this", etc., may mean "one and only one", and may also mean "one or more", "at least one", etc. For example, when articles such as "a", "an" and "the" in English are used in translation, the noun following the article may be understood as a singular expression or a plural expression.

In the embodiments of the present disclosure, "plurality" refers to two or more.

In some embodiments, terms such as "at least one of', "one or more", "a plurality of', and "multiple" may be replaced with one another.

In some embodiments, expressions like "at least one of A and B", "A and/or B", "A in one case and B in another case", and "in response to case A and in response to another case B" may include the following technical solutions depending on the situation: in some embodiments, A (executing A independently of B); in some embodiments, B (executing B independently of A); in some embodiments, execution is selected from A and B (A and B are optionally executed); in some embodiments, A and B (both A and B are executed). The same applies when there are more alternatives such as A, B, and C.

In some embodiments, expressions such as "A or B" may include the following technical solutions depending on the situation: in some embodiments, A (executing A independently of B); in some embodiments, B (executing B independently of A); in some embodiments, execution is selected from A and B (A and B are optionally executed). The same applies when there are more alternatives such as A, B, and C.

In the embodiments of the present disclosure, prefixes such as "first" and "second" are only used to distinguish different described objects, and do not constitute any restriction on the position, order, priority, quantity, content, or other aspects of the described objects. For statements about the described objects, reference shall be made to the descriptions in the context of the claims or the embodiments, and no redundant limitation shall be constituted due to the use of these prefixes. For example, if the described object is a "field", the ordinal numbers before "field" in "first field" and "second field" do not limit the position or order between the "fields"; "first" and "second" do not restrict whether the "fields" they modify are in the same message, nor do they limit the sequence order between the "first field" and the "second field". For another example, if the described object is a "level", the ordinal numbers before the "level" in "first level" and "second level" do not limit the priority between the "levels". For yet another example, the quantity of the described object is not limited by the ordinal number, and may be one or more. Taking the "first apparatus" as an example, the quantity of the "apparatus" therein may be one or more. In addition, objects modified by different prefixes may be the same or different. For instance, if the described object is an "apparatus", the "first apparatus" and the "second apparatus" may be the same apparatus or different apparatuses, and their types may be the same or different; for another example: if the described object is "information", the "first information" and the "second information" may be the same information or different information, and their contents may be the same or different.

In some embodiments, expressions such as "including A", "containing A", "used to indicate A", and "carrying A" can be interpreted as directly carrying A, and can also be interpreted as indirectly indicating A.

In some embodiments, terms such as "in response to...", "in response to determining that...", "in the case of...", "when...", "in the case that...", "if...", and "in the event that..." may be replaced with one another.

In some embodiments, terms such as "greater than", "greater than or equal to", "not less than", "more than", "more than or equal to", "no less than", "higher than", "higher than or equal to", "not lower than", and "above" may be replaced with one another; terms such as "less than", "less than or equal to", "not greater than", "fewer than", "fewer than or equal to", "no more than", "lower than", "lower than or equal to", "not higher than", and "below" may be replaced with one another.

In some embodiments, obtaining data, information, etc., may comply with the laws and regulations of the country where it is obtained.

In some embodiments, data, information, etc., may be obtained after acquiring the user's consent.

In addition, each element, each row, or each column in the tables of the embodiments of the present disclosure may be implemented as a separate embodiment, and any combination of any elements, any rows, or any columns may also be implemented as a separate embodiment.

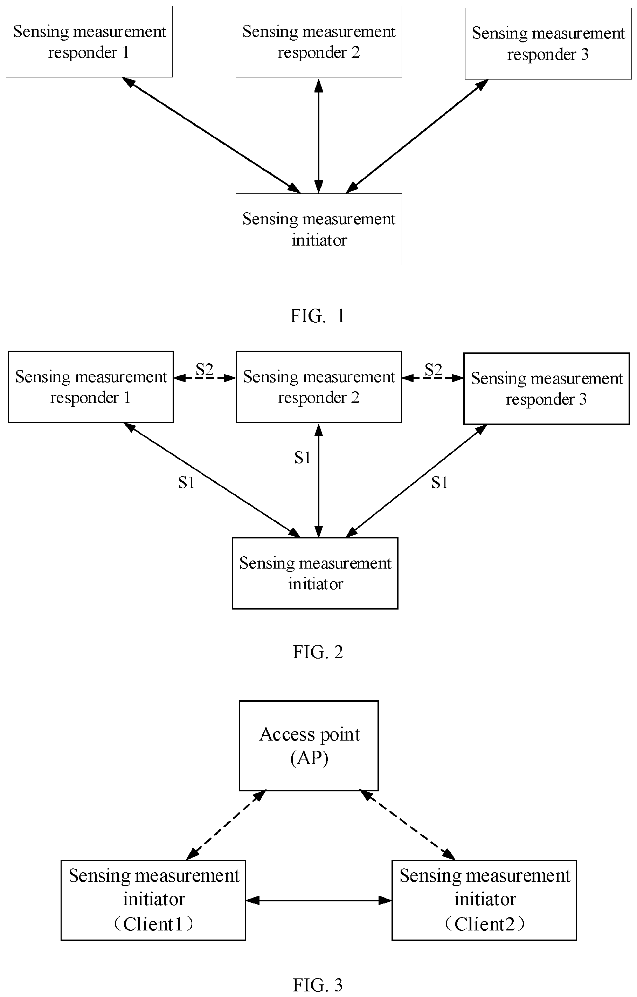

As a first example, referring to FIG. 1 to FIG. 3. The architecture of WLAN sensing measurement and the WLAN sensing measurement procedure to which the sensing measurement method provided by the embodiments of the present disclosure is applied are first introduced.

FIG. 1 shows a schematic diagram of an architecture of WLAN sensing measurement; where a sensing measurement initiating device (initiator) initiates a WLAN sensing measurement (for example, initiating a WLAN sensing measurement session), and there may be multiple sensing measurement responding devices (responders) responding to it, as illustrated by sensing measurement responder 1, sensing measurement responder 2 and sensing measurement responder 3 in FIG. 1. When a sensing measurement initiator initiates a WLAN sensing measurement, multiple associated or unassociated sensing measurement responders for WLAN sensing measurement may respond.

The term "associated" herein may mean that an initial association connection for communication is established between the sensing measurement initiator and the sensing measurement responder, and the term "unassociated" may mean that no initial association connection for communication is established between the sensing measurement initiator and the sensing measurement responder.

Referring to FIG. 2, communication is performed between a sensing measurement initiator and a sensing measurement responder via a communication link, as indicated by communication link S1; communication is performed between sensing measurement responders via a communication link S2.

Each sensing measurement initiator may be a client device (Client); each sensing measurement responder (i.e., sensing measurement responder 1 to sensing measurement responder 3 in this example) may be a station (STA) or an access point (AP).

An AP is a wireless switch for a wireless network and also an access device of the wireless network. An AP may include software applications and/or circuits to enable other types of nodes in the wireless network to communicate with the outside and inside of the wireless network through the AP. By way of example, an AP may be a terminal or a network device equipped with a Wi-Fi chip.

As another architecture, as shown in FIG. 3, both the sensing measurement initiator and the sensing measurement responder may be client devices, which can communicate by connecting to the same access point (AP). In FIG. 3, Client 1 is the sensing measurement initiator and Client 2 is the sensing measurement responder.

A client may include, but is not limited to: a cellular phone, a smart phone, a wearable device, a computer, a personal digital assistant (PDA), a personal communication system (PCS) device, a personal information manager (PIM), a personal navigation device (PND), a global positioning system (GPS), a multimedia device, an Internet of Things (IoT) device, etc.

An AP may be a wireless switch for a wireless network or an access device of a wireless network. An AP may include software applications and/or circuits to enable other types of nodes in the wireless network to communicate with the outside and inside of the wireless network via the AP. By way of example, an AP may be a terminal or a network device equipped with a Wi-Fi chip.

As an illustrative embodiment, a WLAN sensing procedure may include: establishment of a WLAN sensing session, establishment of a WLAN sensing measurement, and termination of the WLAN sensing measurement. In the establishment of a WLAN sensing session, a sensing measurement initiator (e.g., an AP) may initiate a WLAN sensing session, a sensing measurement responder (e.g., an STA) may respond thereto, and the operation parameters associated with the sensing session may be determined and exchanged between the devices. The establishment of a single WLAN sensing session may include the establishment of one or more WLAN sensing measurements. That is, one or more WLAN sensing measurements may be established between a sensing measurement initiator (e.g., an AP) and a sensing measurement responder (e.g., an STA).

A variety of roles may be involved in a sensing measurement procedure, such as a sensing initiator, a sensing responder, a sensing transmitter, and a sensing receiver. For a single sensing procedure, the sensing measurement initiator is configured to initiate the sensing measurement procedure, the sensing measurement responder is configured to participate in the sensing measurement procedure initiated by the sensing measurement initiator. The sensing transmitter sends a NDP frame, and the sensing receiver may perform sensing measurement by using the received NDP frame and feed back the sensing measurement result to the sensing measurement initiator. It can be seen that the functions of the aforementioned various roles do not conflict with one another; in other words, a single device involved in a sensing measurement procedure may assume one or more of the aforementioned roles. For example, the sensing measurement initiator, the sensing measurement responder, the sensing transmitter and the sensing receiver may be the same device, or may be two different devices.

Typically, a WLAN sensing procedure includes trigger-based (TB) sensing measurement and non-trigger-based (Non-TB) sensing measurement. Specifically, for TB-based sensing measurement, an AP serves as the initiator or transmitter, while for Non-TB sensing measurement, an STA serves as the initiator or transmitter.

In a WLAN sensing procedure, the roles of an STA and an AP are generally interchangeable; for example, both can serve as an initiating device (a sensing initiator or a sensing transmitter). When serving as a sensing initiator or a sensing transmitter, an AP can communicate with multiple STAs simultaneously. However, an STA does not have this capability and can only communicate one-on-one with a single sensing responder. This results in a waste of spectrum resources on the one hand and an increase in time delay on the other, which may fail to meet the latency requirements for communication scenarios with strict latency demands.

To address this issue, a method for WLAN sensing measurement using an AP as a proxy for the STA, i.e., sensing by proxy (SBP) measurement is proposed. Specifically, an STA (sensing by proxy initiator) sends an SBP Request frame to an AP (sensing by proxy responder), so that the AP initiates trigger-based sensing measurement as a sensing measurement initiator. The STA may be associated or unassociated with the AP. For an unassociated AP, the AP is required to poll the STA through a Sensing Polling Trigger frame during the polling phase before initiating trigger-based sensing measurement, so that the STA can indicate via a CTS-to-self frame that it is able to participate in the sensing measurement or receive the sensing by proxy measurement results. However, it remains to be studied whether the AP shall proceed to perform the TB sensing measurement when it does not receive the CTS-to-self frame sent by the STA.

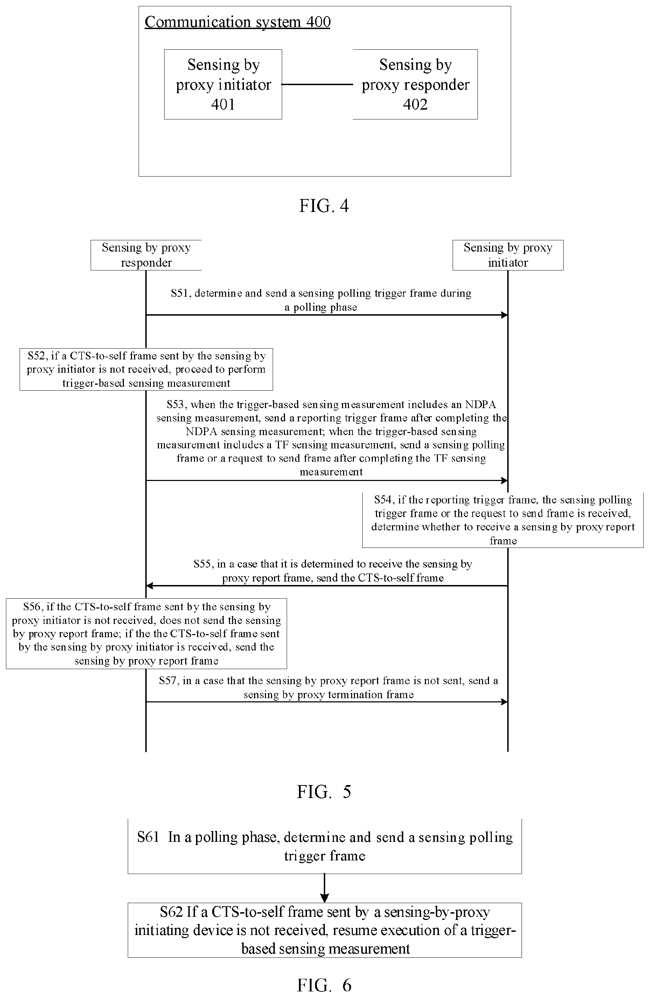

FIG. 4 is a schematic diagram of the architecture of a communication system according to an embodiment of the present disclosure.

As shown in FIG. 4, a communication system 400 includes a sensing by proxy initiator 401 and a sensing by proxy responder 402.

In some embodiments, the sensing by proxy initiator 401 may be an STA, and the sensing by proxy responder 402 may be an AP.

The AP serves as a bridge connecting a wired network and a wireless network. Its main function is to connect various wireless network clients together and then connect the wireless network to an Ethernet network. Specifically, the sensing by proxy initiator 401 may be a terminal device or a network device equipped with a wireless fidelity chip.

The sensing by proxy initiator 401 and the sensing by proxy responder 402 may communicate with each other. An STA may be a device with a wireless communication chip supporting Wi-Fi communication function, a wireless sensor, or a wireless communication terminal. Optionally, the wireless communication terminal may be at least one of, but not limited to, a mobile phone, a wearable device, an IoT device supporting Wi-Fi communication function, a vehicle with Wi-Fi communication function, an intelligent vehicle, a tablet computer (Pad), a computer with wireless transceiving function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home.

Optionally, in the embodiments of the present disclosure, AP and STA may be devices supporting multi-link connectivity, which may be denoted as an Access Point Multi-Link Device (AP MLD) and a Non-Access Point Multi-Link Device (Non-AP MLD) respectively. An AP MLD may refer to an access point supporting multi-link communication function, and a Non-AP MLD may refer to a station supporting multi-link communication function.

It can be understood that the communication system described in the embodiments of the present disclosure is provided for the purpose of illustrating the technical solutions of the embodiments of the present disclosure more clearly, and does not constitute a limitation on the technical solutions provided in the embodiments of the present disclosure. A person of ordinary skill in the art may appreciate that with the evolution of system architectures and the emergence of new service scenarios, the technical solutions provided in the embodiments of the present disclosure are also applicable to similar technical problems.

The following embodiments of the present disclosure may be applied to the communication system 400 shown in FIG. 4, or to some entities thereof, but are not limited thereto. The various entities shown in FIG. 4 are exemplary, the communication system may include all or part of the entities in FIG. 4, and may also include other entities besides those shown in FIG. 1. The quantity and form of each entity may be arbitrary, and each entity may be physical or virtual. The connection relationships between the various entities are exemplary; the various entities may be unconnected or connected in any manner, which may be a direct connection or an indirect connection, a wired connection or a wireless connection.

The various embodiments of the present disclosure may be applied to a wireless local area network (WLAN), for example, the IEEE 802.11 system standards including the 802.11a/b/g, 802.11n, 802.11ac and 802.11ax standards, as well as their next-generation standards such as the 802.11bn, 802.11bf and 802.11be standards. The 802.1 The standard is also referred to as the Wi-Fi 7 standard, the extremely high-throughput (EHT) standard, or applicable to subsequent next-generation standards. Alternatively, the various embodiments of the present disclosure may also be applied to wireless local area network systems such as an Internet of Things (IoT) network or a Vehicle to X (V2X) network. Certainly, the various embodiments of the present disclosure may also be applied to other possible communication systems, for example, a long term evolution (LTE) system, an LTE frequency division duplex (FDD) system, an LTE time division duplex (TDD) system, a universal mobile telecommunication system (UMTS), a worldwide interoperability for microwave access (WiMAX) communication system, and the future 5th Generation (5G) communication system, etc.

The technical solutions in the embodiments of the present disclosure are described below clearly and completely with further reference to the accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

FIG. 5 is an interaction schematic diagram of a sensing measurement method according to an embodiment of the present disclosure. The sensing measurement method shown in FIG. 5 includes the following steps.

In step S51, a sensing by proxy responder determines and sends a sensing polling trigger frame during the polling phase.

In some embodiments, a WLAN sensing measurement procedure may include three phases: polling, measurement and reporting.

During the polling phase, the sensing by proxy responder, serving as a sensing measurement initiator, may send a sensing polling trigger frame to the sensing by proxy initiator and at least one sensing measurement responder.

The sensing by proxy responder, serving as a sensing measurement initiator, may send a sensing polling trigger frame to a sensing measurement responder to determine the availability of the sensing measurement responder (one or more STAs), i.e., whether it is able to participate in the sensing measurement; if an STA is available, it may return a CTS-to-self frame.

Furthermore, the sensing by proxy responder may send a sensing polling trigger frame to the sensing by proxy initiator to determine whether the sensing by proxy initiator is present in the network, and whether the sensing by proxy initiator is able to participate in the sensing measurement or receive the sensing by proxy measurement result.

In some embodiments, during the measurement phase, trigger-based sensing measurement may include null data packet announcement (NDPA) sensing measurement and/or trigger frame (TF) sensing measurement. During the measurement and reporting phases, in a case that a sensing measurement initiator initiates a TF sensing measurement, the sensing measurement initiator may send a trigger frame (which may allocate resources for a sensing measurement responder), and then the sensing measurement responder may send an NDP frame to the sensing measurement initiator, whereby the sensing measurement initiator may perform WLAN sensing measurement. In a case that the sensing measurement initiator initiates an NDPA sensing measurement, the sensing measurement initiator may send an NDPA frame and then immediately send an NDP frame; subsequently, each sensing measurement responder may report to the sensing measurement initiator, thereby implementing WLAN sensing measurement.

In some embodiments, the sensing by proxy initiator and the sensing by proxy responder are unassociated, i.e., no initial association connection for communication is established between the sensing by proxy initiator and the sensing by proxy responder.

Optionally, the sensing by proxy initiator may serve as a sensing measurement responder.

In some embodiments, a sensing polling trigger frame includes the device identifier of the sensing by proxy initiator and the uplink resource unit (RU) for the sensing by proxy initiator to send a CTS-to-self frame.

The device identifier of the sensing by proxy initiator includes, but is not limited to, a device ID, a MAC address, and other relevant information that can uniquely identify the sensing by proxy initiator, which is not limited herein.

Optionally, the sensing polling trigger frame further includes an uplink resource unit (RU) for each sensing measurement responder to send the CTS-to-self frame.

When the sensing polling trigger frame includes uplink resource units (RUs) for multiple devices (the sensing by proxy initiator and at least one sensing measurement responder) to send CTS-to-self frames, the uplink resource units (RUs) corresponding to various devices are different from one another.

In step S52, if the sensing by proxy responder does not receive the CTS-to-self frame sent by the sensing by proxy initiator, the sensing by proxy responder proceeds to perform a trigger-based sensing measurement.

Specifically, after sending the sensing polling trigger frame, if the sensing by proxy responder does not receive the CTS-to-self frame sent by the sensing by proxy initiator but receives the CTS-to-self frame sent by at least one sensing measurement responder, the sensing by proxy responder proceeds to perform trigger-based sensing measurement in this case.

In some embodiments, the trigger-based sensing measurement may include at least one of NDPA sensing measurement and TF sensing measurement.

As an example, after sending the sensing polling trigger frame, if the sensing by proxy responder does not receive the CTS-to-self frame sent by the sensing by proxy initiator, it proceeds to perform NDPA sensing measurement, or proceeds to perform TF sensing measurement, or proceeds to perform both NDPA sensing measurement and TF sensing measurement.

In some embodiments, after sending the sensing polling trigger frame, if the sensing by proxy responder does not receive the CTS-to-self frames sent by various sensing measurement responders, it determines that various sensing measurement responders are unable to participate in the trigger-based sensing measurement, and in this case, the sensing by proxy responder does not proceed to perform the trigger-based sensing measurement.

Optionally, in this case, the sensing by proxy responder may send a sensing by proxy termination frame to the sensing by proxy initiator to terminate the sensing by proxy measurement initiated by the sensing by proxy initiator.

In step S53, when the trigger-based sensing measurement includes the NDPA sensing measurement, the sensing by proxy responder sends a reporting trigger frame to the sensing by proxy initiator after completing the NDPA sensing measurement; when the trigger-based sensing measurement includes the TF sensing measurement, the sensing by proxy responder sends a sensing polling frame or a request to send frame to the sensing by proxy initiator after completing the TF sensing measurement.

In some embodiments, when the trigger-based sensing measurement includes the NDPA sensing measurement-i.e., when the sensing by proxy responder proceeds to perform the NDPA sensing measurement without receiving the CTS-to-self frame sent by the sensing by proxy initiator-the sensing by proxy responder may send a reporting trigger frame to the sensing by proxy initiator after completing the NDPA sensing measurement.

The reporting trigger frame is used to determine whether the sensing by proxy initiator is present in the network, i.e., to request the transmission of the sensing by proxy measurement results or to determine whether the sensing by proxy initiator is able to receive the sensing by proxy measurement result.

If the sensing by proxy initiator receives the reporting trigger frame and returns a CTS-to-self frame, it is determined that the sensing by proxy initiator permits the sensing by proxy responder to send the sensing by proxy measurement result, i.e., it is determined that the sensing by proxy initiator is able to receive the sensing by proxy measurement result.

As an example, the sensing by proxy responder initiates an NDPA sensing measurement as a sensing measurement initiator, and the sensing by proxy initiator participates in the NDPA sensing measurement as a sensing measurement responder. After completing the NDPA sensing measurement, the sensing by proxy responder may send a reporting trigger frame to the sensing by proxy initiator.

In some embodiments, when the trigger-based sensing measurement includes TF sensing measurement-i.e., when the sensing by proxy responder proceeds to perform the TF sensing measurement without receiving the CTS-to-self frame sent by the sensing by proxy initiator-the sensing by proxy responder may send a sensing polling trigger frame to the sensing by proxy initiator again, or send a request to send (RTS) frame to the sensing by proxy initiator, after completing the TF sensing measurement.

The sensing polling trigger frame is used to determine whether the sensing by proxy initiator is present in the network, i.e., to request the transmission of the sensing by proxy measurement result or to determine whether the sensing by proxy initiator is able to receive the sensing by proxy measurement result.

The request to send frame is used to request the transmission of the sensing by proxy measurement result to the sensing by proxy initiator.

Optionally, the reporting trigger frame, the sensing polling trigger frame or the request to send frame sent by the sensing by proxy responder may include the device identifier of the sensing by proxy initiator, and may also include the uplink resource unit (RU) for the sensing by proxy initiator to send the CTS-to-self frame.

In step S54, if the sensing by proxy initiator receives the reporting trigger frame, the sensing polling trigger frame or the request to send frame, the sensing by proxy initiator determines whether to receive a sensing by proxy report frame.

In some embodiments, if the sensing by proxy initiator receives a reporting trigger frame, it determines that the sensing by proxy responder has completed the NDPA sensing measurement, and determines that the sensing by proxy responder requests to send a sensing by proxy report frame via the reporting trigger frame, In other words, it is determined that the sensing by proxy responder verifies whether the sensing by proxy initiator is able to receive the sensing by proxy measurement results through the reporting trigger frame.

In some embodiments, if the sensing by proxy initiator receives a sensing polling trigger frame or a request to send frame, it determines that the sensing by proxy responder has completed the TF sensing measurement, and determines that the sensing by proxy responder requests to send the sensing by proxy measurement result (i.e., to request to send a sensing by proxy report frame) via the sensing polling trigger frame or the request to send (RTS) frame.

The sensing by proxy report frame includes the sensing by proxy measurement result obtained by the sensing by proxy responder after completing the trigger-based sensing measurement.

In step S55, in a case that the sensing by proxy initiator determines to receive the sensing by proxy report frame, the sensing by proxy initiator sends the CTS-to-self frame to the sensing by proxy responder.

In some embodiments, if the sensing by proxy initiator is present in the network, or determines that it is able to receive the sensing by proxy measurement result sent by the sensing by proxy responder, or determines that it permits the sensing by proxy responder to send the sensing by proxy measurement result, it may determine to receive the sensing by proxy report frame sent by the sensing by proxy responder that includes the sensing by proxy measurement result.

The sensing by proxy initiator may send the CTS-to-self frame to the sensing by proxy responder to indicate that the sensing by proxy initiator determines to receive the sensing by proxy report frame.

In step S56, if the sensing by proxy responder does not receive the CTS-to-self frame sent by the sensing by proxy initiator, the sensing by proxy responder does not send the sensing by proxy report frame to the sensing by proxy initiator; if the sensing by proxy responder receives the CTS-to-self frame sent by the sensing by proxy initiator, the sensing by proxy responder sends the sensing by proxy report frame to the sensing by proxy initiator.

In some embodiments, after completing the trigger-based sensing measurement and sending a reporting trigger frame, a sensing polling trigger frame or a request to send frame to the sensing by proxy initiator, the sensing by proxy responder may determine whether it receives the CTS-to-self frame sent by the sensing by proxy initiator in response to the reporting trigger frame, the sensing polling trigger frame or the request to send frame.

If the sensing by proxy responder receives the CTS-to-self frame sent by the sensing by proxy initiator, it determines that the sensing by proxy initiator is present in the network, or that the sensing by proxy initiator is able to receive the sensing by proxy measurement result sent by the sensing by proxy responder, or that the sensing by proxy initiator permits the sensing by proxy responder to send the sensing by proxy measurement result.

In this case, the sensing by proxy responder may send a sensing by proxy report frame (SBP report frame) to the sensing by proxy initiator.

If the sensing by proxy responder does not receive the CTS-to-self frame sent by the sensing by proxy initiator, it determines that the sensing by proxy initiator is not present in the network, or that the sensing by proxy initiator is unable to receive the sensing by proxy measurement result sent by the sensing by proxy responder, or that the sensing by proxy initiator does not permit the sensing by proxy responder to send the sensing by proxy measurement result.

In this case, the sensing by proxy responder does not need to send the sensing by proxy report frame to the sensing by proxy initiator.

The sensing by proxy report frame includes the sensing by proxy measurement result determined by the sensing by proxy responder after performing the trigger-based sensing measurement.

In step S57, in a case that the sensing by proxy responder does not send the sensing by proxy report frame to the sensing by proxy initiator, the sensing by proxy responder sends a sensing by proxy termination frame (SBP termination frame) to the sensing by proxy initiator.

The sensing by proxy termination frame is used to indicate the termination of the sensing by proxy measurement procedure.

After completing the trigger-based sensing measurement and sending a reporting trigger frame, a sensing polling trigger frame or a request to send frame to the sensing by proxy initiator, if the sensing by proxy responder does not receive the CTS-to-self frame sent by the sensing by proxy initiator in response to the reporting trigger frame, the sensing polling trigger frame or the request to send frame, it may determine not to send the sensing by proxy report frame to the sensing by proxy initiator, and thus may send a sensing by proxy termination frame to the sensing by proxy initiator to terminate the sensing by proxy measurement procedure initiated by the sensing by proxy initiator.

The sensing measurement method involved in the embodiments of the present disclosure may include at least one of the aforementioned steps and embodiments. For example, step S52 may be implemented as a separate embodiment, steps S51 to S52 may be implemented as a separate embodiment, steps S54 to S55 may be implemented as a separate embodiment, steps S51 to S53 may be implemented as a separate embodiment, Steps s51 to S56 may be implemented as a separate embodiment, and steps S51 to S57 may be implemented as a separate embodiment, but are not limited thereto.

FIG. 6 is a first schematic flow diagram of a sensing measurement method according to an embodiment of the present disclosure. As shown in FIG. 6, the method is performed by a sensing by proxy responder and includes the following steps.

In step S61, the sensing by proxy responder determines and sends a sensing polling trigger frame during the polling phase.

In some embodiments, a WLAN sensing measurement procedure may include three phases: polling, measurement and reporting.

During the polling phase, the sensing by proxy responder, serving as a sensing measurement initiator, may send a sensing polling trigger frame to the sensing by proxy initiator and at least one sensing measurement responder.

The sensing by proxy responder, serving as a sensing measurement initiator, may send a sensing polling trigger frame to a sensing measurement responder to determine the availability of the sensing measurement responder (one or more STAs), i.e., whether it is able to participate in the sensing measurement; if an STA is available, it may return a CTS-to-self frame.

Furthermore, the sensing by proxy responder may send a sensing polling trigger frame to the sensing by proxy initiator to determine whether the sensing by proxy initiator is present in the network, and whether the sensing by proxy initiator is able to participate in the sensing measurement or receive the sensing by proxy measurement result.

In some embodiments, during the measurement phase, trigger-based sensing measurement may include null data packet announcement (NDPA) sensing measurement and/or trigger frame (TF) sensing measurement. During the measurement and reporting phases, in a case that a sensing measurement initiator initiates a TF sensing measurement, the sensing measurement initiator may send a trigger frame (which may allocate resources for a sensing measurement responder), and then the sensing measurement responder may send an NDP frame to the sensing measurement initiator, whereby the sensing measurement initiator may perform WLAN sensing measurement. In a case that the sensing measurement initiator initiates an NDPA sensing measurement, the sensing measurement initiator may send an NDPA frame and then immediately send an NDP frame; subsequently, each sensing measurement responder may report to the sensing measurement initiator, thereby implementing WLAN sensing measurement.

In some embodiments, the sensing by proxy initiator and the sensing by proxy responder are unassociated, i.e., no initial association connection for communication is established between the sensing by proxy initiator and the sensing by proxy responder.

Optionally, the sensing by proxy initiator may serve as a sensing measurement responder.

In some embodiments, a sensing polling trigger frame includes the device identifier of the sensing by proxy initiator and the uplink resource unit (RU) for the sensing by proxy initiator to send a CTS-to-self frame.

The device identifier of the sensing by proxy initiator includes, but is not limited to, a device ID, a MAC address, and other relevant information that can uniquely identify the sensing by proxy initiator, which is not limited herein.

Optionally, the sensing polling trigger frame further includes an uplink resource unit (RU) for each sensing measurement responder to send the CTS-to-self frame.

When the sensing polling trigger frame includes uplink resource units (RUs) for multiple devices (the sensing by proxy initiator and at least one sensing measurement responder) to send CTS-to-self frames, the uplink resource units (RUs) corresponding to various devices are different from one another.

In step S62, if the sensing by proxy responder does not receive the CTS-to-self frame sent by the sensing by proxy initiator, the sensing by proxy responder proceeds to perform trigger-based sensing measurement.

Specifically, after sending the sensing polling trigger frame, if the sensing by proxy responder does not receive the CTS-to-self frame sent by the sensing by proxy initiator but receives the CTS-to-self frame sent by at least one sensing measurement responder, the sensing by proxy responder proceeds to perform trigger-based sensing measurement in this case.

In some embodiments, the trigger-based sensing measurement may include at least one of NDPA sensing measurement and TF sensing measurement.

As an example, after sending the sensing polling trigger frame, if the sensing by proxy responder does not receive the CTS-to-self frame sent by the sensing by proxy initiator, it proceeds to perform NDPA sensing measurement, or proceeds to perform TF sensing measurement, or proceeds to perform both NDPA sensing measurement and TF sensing measurement.

In some embodiments, after sending the sensing polling trigger frame, if the sensing by proxy responder does not receive the CTS-to-self frames sent by various sensing measurement responders, it determines that various sensing measurement responders are unable to participate in the trigger-based sensing measurement, and in this case, the sensing by proxy responder does not proceed to perform the trigger-based sensing measurement.

Optionally, in this case, the sensing by proxy responder may send a sensing by proxy termination frame to the sensing by proxy initiator to terminate the sensing by proxy measurement initiated by the sensing by proxy initiator.

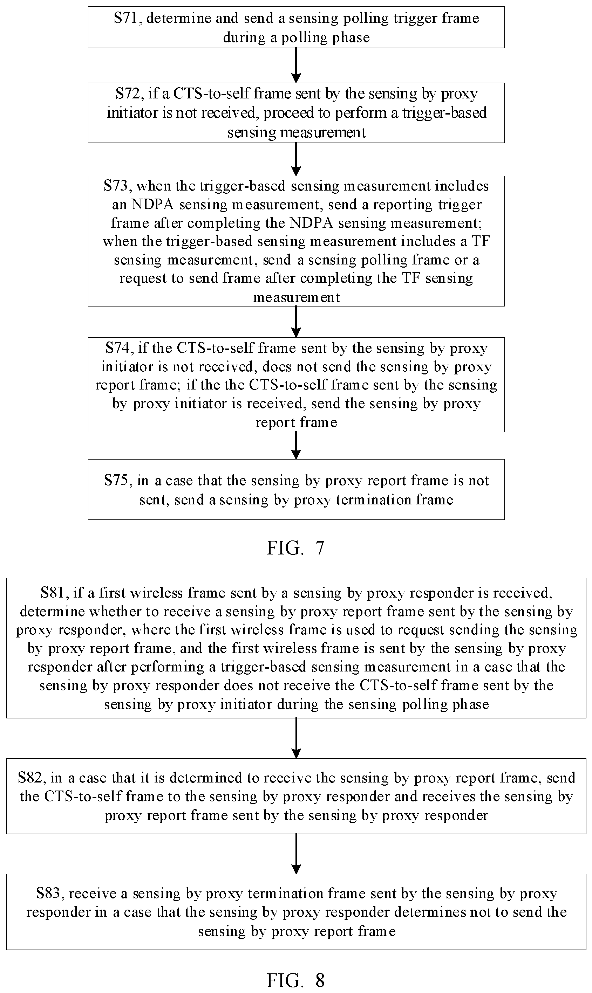

FIG. 7 is a second schematic flow diagram of a sensing measurement method according to an embodiment of the present disclosure. As shown in FIG. 7, the method includes the following steps.

In step S71, a sensing by proxy responder determines and sends a sensing polling trigger frame during a polling phase.

In step S72, if the sensing by proxy responder does not receive a CTS-to-self frame sent by the sensing by proxy initiator, the sensing by proxy responder proceeds to perform a trigger-based sensing measurement.

In some embodiments, for the specific implementation manners of Steps S71 to S72, reference may be made to the implementation manners shown in steps S61 to S62 in FIG. 6, which are not described in detail herein.

In step S73, after completing the trigger-based sensing measurement, the sensing by proxy responder sends a first wireless frame to the sensing by proxy initiator, where the first wireless frame is used to request sending a sensing by proxy report frame.

In some embodiments, the first wireless frame includes a reporting trigger frame, a sensing polling trigger frame or a request to send frame, and is used to request the transmission of a sensing by proxy report frame containing the sensing by proxy measurement result to the sensing by proxy initiator.

In some embodiments, when the trigger-based sensing measurement includes an NDPA sensing measurement, the first wireless frame is a reporting trigger frame; when the trigger-based sensing measurement includes a TF sensing measurement, the first wireless frame is a sensing polling trigger frame or a request to send frame.

In some embodiments, when the trigger-based sensing measurement includes an NDPA sensing measurement, the sensing by proxy responder sends a reporting trigger frame to the sensing by proxy initiator after completing the NDPA sensing measurement; when the trigger-based sensing measurement includes a TF sensing measurement, the sensing by proxy responder sends a sensing polling frame or a request to send frame to the sensing by proxy initiator after completing the TF sensing measurement.

In some embodiments, when the trigger-based sensing measurement includes the NDPA sensing measurement-i.e., when the sensing by proxy responder proceeds to perform the NDPA sensing measurement without receiving the CTS-to-self frame sent by the sensing by proxy initiator-the sensing by proxy responder may send a reporting trigger frame to the sensing by proxy initiator after completing the NDPA sensing measurement.

The reporting trigger frame is used to determine whether the sensing by proxy initiator is present in the network, i.e., to request the transmission of the sensing by proxy measurement results or to determine whether the sensing by proxy initiator is able to receive the sensing by proxy measurement result.

If the sensing by proxy initiator receives the reporting trigger frame and returns a CTS-to-self frame, it is determined that the sensing by proxy initiator permits the sensing by proxy responder to send the sensing by proxy measurement result, i.e., it is determined that the sensing by proxy initiator is able to receive the sensing by proxy measurement result.

As an example, the sensing by proxy responder initiates an NDPA sensing measurement as a sensing measurement initiator, and the sensing by proxy initiator participates in the NDPA sensing measurement as a sensing measurement responder. After completing the NDPA sensing measurement, the sensing by proxy responder may send a reporting trigger frame to the sensing by proxy initiator.

In some embodiments, when the trigger-based sensing measurement includes TF sensing measurement-i.e., when the sensing by proxy responder proceeds to perform the TF sensing measurement without receiving the CTS-to-self frame sent by the sensing by proxy initiator-the sensing by proxy responder may send a sensing polling trigger frame to the sensing by proxy initiator again, or send a request to send (RTS) frame to the sensing by proxy initiator, after completing the TF sensing measurement.

The sensing polling trigger frame is used to determine whether the sensing by proxy initiator is present in the network, i.e., to request the transmission of the sensing by proxy measurement results or to determine whether the sensing by proxy initiator is able to receive the sensing by proxy measurement results, thereby achieving the purpose of requesting the transmission of the sensing by proxy report frame.

In some embodiments, if the sensing by proxy initiator determines that it is present in the network, or determines that it is able to receive the sensing by proxy measurement results sent by the sensing by proxy responder, or determines that it permits the sensing by proxy responder to send the sensing by proxy measurement results, the sensing by proxy initiator may respond by sending a CTS-to-self frame.

Optionally, the reporting trigger frame, the sensing polling trigger frame or the request to send frame sent by the sensing by proxy responder may include the device identifier of the sensing by proxy initiator, and may also include the uplink resource unit (RU) for the sensing by proxy initiator to send the CTS-to-self frame.

In step S74, if the sensing by proxy responder does not receive the CTS-to-self frame sent by the sensing by proxy initiator, the sensing by proxy responder does not send the sensing by proxy report frame to the sensing by proxy initiator; if the sensing by proxy responder receives the CTS-to-self frame sent by the sensing by proxy initiator, the sensing by proxy responder sends the sensing by proxy report frame to the sensing by proxy initiator.

In some embodiments, after completing the trigger-based sensing measurement and sending a reporting trigger frame, a sensing polling trigger frame or a request to send frame to the sensing by proxy initiator, the sensing by proxy responder may determine whether it receives the CTS-to-self frame sent by the sensing by proxy initiator in response to the reporting trigger frame, the sensing polling trigger frame or the request to send frame.

If the sensing by proxy responder receives the CTS-to-self frame sent by the sensing by proxy initiator, it determines that the sensing by proxy initiator is present in the network, or that the sensing by proxy initiator is able to receive the sensing by proxy measurement result sent by the sensing by proxy responder, or that the sensing by proxy initiator permits the sensing by proxy responder to send the sensing by proxy measurement result.

In this case, the sensing by proxy responder may send a sensing by proxy report frame (SBP report frame) to the sensing by proxy initiator.

If the sensing by proxy responder does not receive the CTS-to-self frame sent by the sensing by proxy initiator, it determines that the sensing by proxy initiator is not present in the network, or that the sensing by proxy initiator is unable to receive the sensing by proxy measurement result sent by the sensing by proxy responder, or that the sensing by proxy initiator does not permit the sensing by proxy responder to send the sensing by proxy measurement result.

In this case, the sensing by proxy responder does not need to send the sensing by proxy report frame to the sensing by proxy initiator.

The sensing by proxy report frame includes the sensing by proxy measurement result determined by the sensing by proxy responder after performing the trigger-based sensing measurement.

In step S75, in a case that the sensing by proxy responder does not send the sensing by proxy report frame to the sensing by proxy initiator, the sensing by proxy responder sends a sensing by proxy termination frame (SBP termination frame) to the sensing by proxy initiator.

The sensing by proxy termination frame is used to indicate the termination of the sensing by proxy measurement procedure.

After completing the trigger-based sensing measurement and sending a reporting trigger frame, a sensing polling trigger frame or a request to send frame to the sensing by proxy initiator, if the sensing by proxy responder does not receive the CTS-to-self frame sent by the sensing by proxy initiator in response to the reporting trigger frame, the sensing polling trigger frame or the request to send frame, it may determine not to send the sensing by proxy report frame to the sensing by proxy initiator, and thus may send a sensing by proxy termination frame to the sensing by proxy initiator to terminate the sensing by proxy measurement procedure initiated by the sensing by proxy initiator.

The sensing measurement method involved in the embodiments of the present disclosure may include at least one of the aforementioned steps and embodiments. For example, step S72 may be implemented as a separate embodiment, steps S71 to S72 may be implemented as a separate embodiment, steps S71 to S73 may be implemented as a separate embodiment, steps S71 to S74 may be implemented as a separate embodiment, and steps S71 to S77 may be implemented as a separate embodiment, but are not limited thereto.

FIG. 8 is a third schematic flow diagram of a sensing measurement method according to an embodiment of the present disclosure. As shown in FIG. 8, the method is performed by a sensing by proxy initiator and includes the following.

In step S81, if a first wireless frame sent by a sensing by proxy responder is received, it is determined whether to receive a sensing by proxy report frame sent by the sensing by proxy responder, where the first wireless frame is used to request sending the sensing by proxy report frame, and the first wireless frame is sent by the sensing by proxy responder after performing a trigger-based sensing measurement in a case that the sensing by proxy responder does not receive the CTS-to-self frame sent by the sensing by proxy initiator during the sensing polling phase.

In some embodiments, a WLAN sensing measurement procedure may include three phases: polling, measurement and reporting.

During the polling phase, the sensing by proxy responder, serving as a sensing measurement initiator, may send a sensing polling trigger frame to the sensing by proxy initiator and at least one sensing measurement responder in the polling phase. In addition, the sensing by proxy responder may send a sensing polling trigger frame to the sensing by proxy initiator to determine whether the sensing by proxy initiator is present in the network and to determine whether the sensing by proxy initiator is able to participate in the sensing measurement or receive the sensing by proxy measurement result. After sending the Sensing polling trigger frame, if the sensing by proxy responder does not receive the CTS-to-self frame sent by the sensing by proxy initiator but receives the CTS-to-self frame sent by at least one sensing measurement responder, the sensing by proxy responder proceeds to perform the trigger-based sensing measurement in this case.

The first wireless frame is sent by the sensing by proxy responder to the sensing by proxy initiator after completing the trigger-based sensing measurement, and is used to request the transmission of a sensing by proxy report frame.

In some embodiments, the first wireless frame includes a reporting trigger frame, a sensing polling trigger frame or a request to send frame, and is used to request the transmission of a sensing by proxy report frame containing the sensing by proxy measurement result to the sensing by proxy initiator.

In some embodiments, when the trigger-based sensing measurement includes an NDPA sensing measurement, the first wireless frame is a reporting trigger frame; when the trigger-based sensing measurement includes a TF sensing measurement, the first wireless frame is a sensing polling trigger frame or a request to send frame.

In some embodiments, when the trigger-based sensing measurement includes an NDPA sensing measurement, the first wireless frame is a reporting trigger frame sent by the sensing by proxy responder to the sensing by proxy initiator after completing the NDPA sensing measurement; when the trigger-based sensing measurement includes a TF sensing measurement, the first wireless frame is a sensing polling frame or a request to send frame sent by the sensing by proxy responder to the sensing by proxy initiator after completing the TF sensing measurement.

In some embodiments, the reporting trigger frame, sensing polling trigger frame or request to send frame sent by the sensing by proxy responder may include the device identifier of the sensing by proxy initiator, and may also include the uplink resource unit (RU) used by the sensing by proxy initiator to send a CTS-to-self frame.

In some embodiments, the trigger-based sensing measurement may include at least one of the NDPA sensing measurement or the TF sensing measurement.

As an example, the first wireless frame is sent by the sensing by proxy responder after the latter sends a sensing polling trigger frame, does not receive the CTS-to-self frame sent by the sensing by proxy initiator, and then proceeds to perform an NDPA sensing measurement, a TF sensing measurement, or both the NDPA sensing measurement and the TF sensing measurement.

In some embodiments, the sensing by proxy initiator and the sensing by proxy responder are unassociated, i.e., no initial association connection for communication is established between the sensing by proxy initiator and the sensing by proxy responder.

Optionally, the sensing by proxy initiator may serve as a sensing measurement responder.

In some embodiments, a sensing polling trigger frame includes the device identifier of the sensing by proxy initiator and the uplink resource unit (RU) for the sensing by proxy initiator to send a CTS-to-self frame.

The device identifier of the sensing by proxy initiator includes, but is not limited to, a device ID, a MAC address, and other relevant information that can uniquely identify the sensing by proxy initiator, which is not limited herein.

Optionally, the sensing polling trigger frame further includes an uplink resource unit (RU) for each sensing measurement responder to send the CTS-to-self frame.

When the sensing polling trigger frame includes uplink resource units (RUs) for multiple devices (the sensing by proxy initiator and at least one sensing measurement responder) to send CTS-to-self frames, the uplink resource units (RUs) corresponding to various devices are different from one another.

In step S82, in a case that it is determined to receive the sensing by proxy report frame, the sensing by proxy initiator sends the CTS-to-self frame to the sensing by proxy responder and receives the sensing by proxy report frame sent by the sensing by proxy responder.

In some embodiments, if the sensing by proxy initiator determines that it is present in the network, or determines that it is able to receive the sensing by proxy measurement results sent by the sensing by proxy responder, or determines that it permits the sensing by proxy responder to send the sensing by proxy measurement results, the sensing by proxy initiator determines to receive the sensing by proxy report frame.

In this case, the sensing by proxy initiator may indicate that it can receive the sensing by proxy report frame by sending a CTS-to-self frame, and further receive the sensing by proxy report frame sent by the sensing by proxy responder after the latter receives the CTS-to-self frame.

The sensing by proxy report frame includes the sensing by proxy measurement results obtained by the sensing by proxy responder after completing the trigger-based sensing measurement.

In step S83, in a case that the sensing by proxy responder determines not to send the sensing by proxy report frame, a sensing by proxy termination frame sent by the sensing by proxy responder is received.

In some embodiments, after receiving the first wireless frame, if the sensing by proxy initiator determines not to receive the sensing by proxy report frame sent by the sensing by proxy responder, it does not send the CTS-to-self frame to the sensing by proxy responder. In this case, the sensing by proxy responder determines not to send the sensing by proxy report frame to the sensing by proxy initiator and sends the sensing by proxy termination frame to the sensing by proxy initiator.

In this case, the proxy sensing initiator can receive a sensing by proxy termination frame to determine that the proxy sensing measurement process has terminated.

After sending the first wireless frame, the sensing by proxy responder determines not to send the sensing by proxy report frame regardless of whether the sensing by proxy initiator receives the first wireless frame, or fails to respond to the first wireless frame after receiving it.

The sensing measurement method involved in the embodiments of the present disclosure may include at least one of the aforementioned steps and embodiments. For example, step S81 may be implemented as a separate embodiment, steps S81 to S82 may be implemented as a separate embodiment, and steps S81 to S83 may be implemented as a separate embodiment, but are not limited thereto.

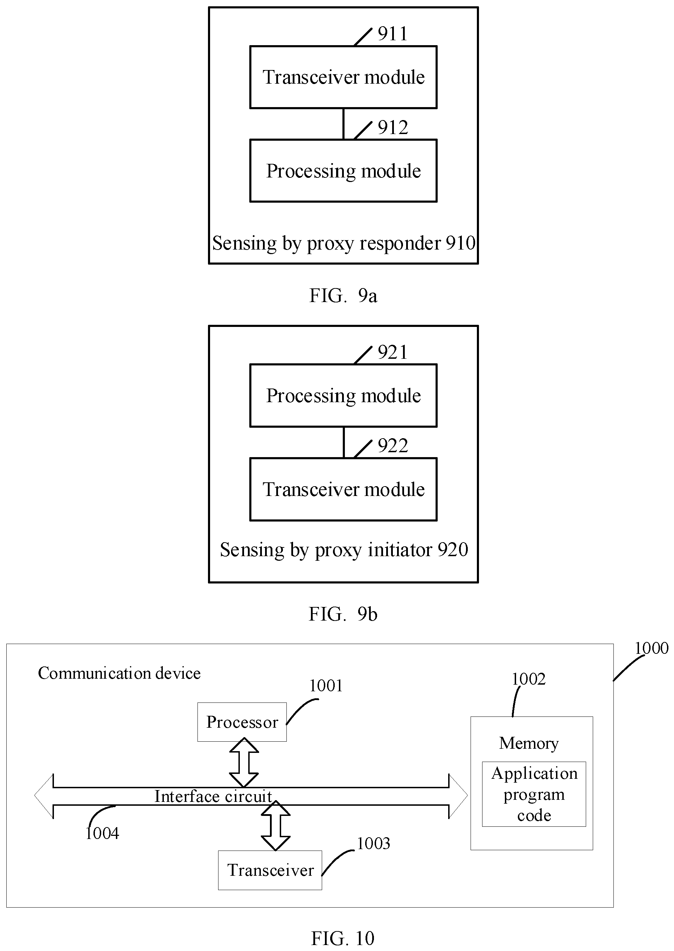

FIG. 9a is a schematic structural diagram of a sensing by proxy responder proposed in an embodiment of the present disclosure. As shown in FIG. 9a, the sensing by proxy responder 910 may include: a transceiver module 911 and a processing module 912.

In some embodiments, the aforementioned transceiver module 911 is configured to determine and send a sensing polling trigger frame during the polling phase; the aforementioned processing module 912 is configured to proceed to perform a trigger-based sensing measurement if a CTS-to-self frame sent by the sensing by proxy initiator is not received.

Optionally, the aforementioned transceiver module 911 is configured to perform at least one of the transceiving steps executed by the sensing by proxy responder in any of the above methods (for example, step S51, step S53, steps S55 to S57, step S61, step S71, steps S73 to S75, but not limited thereto), which will not be described in detail herein. The aforementioned processing module 912 is configured to perform at least one of the processing steps executed by the sensing by proxy responder in any of the above methods (for example, step S52, step S62, step S72, but not limited thereto).

FIG. 9b is a schematic structural diagram of a sensing by proxy initiator proposed in an embodiment of the present disclosure. As shown in FIG. 9b, the sensing by proxy initiator 920 may include: a transceiver module 921 and a processing module 922.

In some embodiments, the processing module 921 is configured to: determine whether to receive a sensing by proxy report frame sent by a sensing by proxy responder if a first wireless frame sent by the sensing by proxy responder is received, where the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by the sensing by proxy initiator during a sensing polling phase.

Optionally, the aforementioned transceiver module 922 is configured to perform at least one of the transceiving steps executed by the sensing by proxy initiator in any of the above methods (for example, step S55, steps S82 to S83, but not limited thereto), which will not be described in detail herein. The aforementioned processing module 921 is configured to perform at least one of the processing steps executed by the sensing by proxy initiator in any of the above methods (for example, step S54, step S81, but not limited thereto).

It should be understood that the division of each unit in the above apparatus is merely a division of logical functions. In actual implementation, all or part of the units may be integrated into a single physical entity, or they may be physically separated. In addition, the units in the apparatus may be implemented in the form of a processor invoking software. For example, the apparatus includes a processor, which is connected to a memory, the memory stores computer instructions, and the processor invokes the computer instructions stored in the memory to implement any one of the above methods or the functions of each unit of the above apparatus. The processor is, for example, a general-purpose processor such as a central processing unit (CPU) or a microprocessor, and the memory is a memory inside the apparatus or a memory outside the apparatus. Alternatively, the units in the apparatus may be implemented in the form of hardware circuits, and the functions of some or all units may be realized through the design of hardware circuits. The above hardware circuits may be understood as one or more processors. For example, in one implementation, the above hardware circuit is an application-specific integrated circuit (ASIC), and the functions of some or all of the above units are realized through the design of the logical relationships of components in the circuit. For another example, in another implementation, the above hardware circuit may be implemented by a programmable logic device (PLD). Taking a field programmable gate array (FPGA) as an example, it may include a large number of logic gate circuits, and the connection relationships between the logic gate circuits are configured through configuration files, thereby realizing the functions of some or all of the above units. All units of the above apparatus may be entirely implemented in the form of the processor invoking software, or entirely in the form of hardware circuits, or part of the units in the form of the processor invoking software and the remaining part in the form of hardware circuits.

In the embodiments of the present disclosure, a processor is a type of circuit with signal processing capability. In one implementation, the processor may be a circuit capable of reading and executing instructions, such as a central processing unit (CPU), a microprocessor, a graphics processing unit (GPU) (which can be understood as a type of microprocessor), or a digital signal processor (DSP), etc. In another implementation, the processor may realize certain functions through the logical relationships of a hardware circuit, where the logical relationships of the aforementioned hardware circuit are either fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, the process in which the processor loads a configuration file to realize the configuration of the hardware circuit can be understood as the process in which the processor loads instructions to realize the functions of some or all of the aforementioned units. In addition, the processor may also be a hardware circuit designed for artificial intelligence, which can be understood as a type of ASIC, such as a neural network processing unit (NPU), a tensor processing unit (TPU), or a deep learning processing unit (DPU), etc.

FIG. 10 is a schematic structural diagram of a communication device proposed in an embodiment of the present disclosure. The communication device 1000 may be a sensing by proxy initiator or a sensing by proxy responder, or a chip, a chip system, a processor, etc., that supports the sensing by proxy initiator or the sensing by proxy responder to implement any of the above methods. The communication device may be used to implement the methods described in the foregoing method embodiments, and for details, reference may be made to the descriptions in the foregoing method embodiments.

As shown in FIG. 10, the communication device 1000 includes one or more processors 1001. The processor 1001 may be a general-purpose processor, a special-purpose processor, etc., such as a baseband processor or a central processing unit. The baseband processor may be configured to process communication protocols and communication data, and the central processing unit may be configured to control a communication apparatus (e.g., a base station, a baseband chip, a terminal device, a terminal device chip, a DU, a CU, etc.), execute programs, and process program data. The communication device 1000 is configured to perform any of the above methods.

In some embodiments, the communication device 1000 further includes one or more memories 1002 for storing instructions. Optionally, all or part of the memory 1002 may also be disposed outside the communication device 1000.

In some embodiments, the communication device 1000 further includes one or more transceivers 1003. When the communication device 1000 includes one or more transceivers 1003, the transceiver 1003 performs at least one of the communication steps such as transmission and/or reception in the aforementioned methods (for example, step S51, step S53, steps S55 to S57, step S61, step S71, steps S73 to S75, steps S82 to S83, but not limited thereto), and the processor 1001 performs at least one of the other steps (for example, step S52, step S54, step S62, step S72, step S81, but not limited thereto).

In some embodiments, a transceiver may include a receiver and a transmitter, where the receiver and the transmitter may be separate or integrated. Optionally, terms such as transceiver, transceiver unit, transceiver device, and transceiver circuit may be used interchangeably; terms such as transmitter, transmitting unit, transmitter device, and transmitting circuit may be used interchangeably; and terms such as receiver, receiving unit, receiver device, and receiving circuit may be used interchangeably.

Optionally, the communication device 1000 further includes one or more interface circuits 1004. The interface circuits 1004 are connected to the memory 1002, and may be configured to receive signals from the memory 1002 or other devices, and may also be configured to send signals to the memory 1002 or other apparatuses. For example, the interface circuit 1004 may read the instructions stored in the memory 1002 and send the instructions to the processor 1001.

The communication device 1000 described in the above embodiments may be a sensing by proxy initiator or a sensing by proxy responder, but the scope of the communication device 1000 described in the present disclosure is not limited thereto, and the structure of the communication device 1000 may not be limited by FIG. 10. A communication device may be a standalone device or a part of a larger device. For example, the communication device may be: (1) a standalone integrated circuit (IC), a chip, a chip system or a subsystem; (2) a set with one or more ICs, and optionally, the aforesaid IC set may also include a storage component for storing data and programs; (3) an ASIC, such as a modem; (4) a module that can be embedded in other devices; (5) a receiver, a terminal device, an intelligent terminal device, a cellular phone, a wireless device, a handset, a mobile unit, a vehicle-mounted device, a network device, a cloud device, an artificial intelligence device, and the like; (6) others, etc.

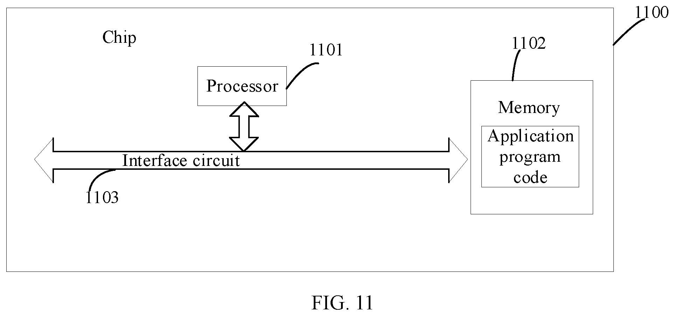

FIG. 11 is a schematic structural diagram of a chip 1100 proposed in an embodiment of the present disclosure. The chip 1100 includes one or more processors 1101, and the chip 1100 is configured to perform any of the aforementioned methods.

In some embodiments, the chip 1100 further includes one or more interface circuits 1103. Optionally, the interface circuit 1103 is connected to the memory 1102, the interface circuit 1103 may be configured to receive signals from the memory 1102 or other devices, and the interface circuit 1103 may be configured to send signals to the memory 1102 or other devices. For example, the interface circuit 1103 may read instructions stored in the memory 1102 and send the instructions to the processor 1101.

In some embodiments, the interface circuit 1103 performs at least one of the communication steps such as transmission and/or reception in the aforementioned methods (for example, step S51, step S53, steps S55 to S57, step S61, step S71, steps S73 to S75, steps S82 to S83, but not limited thereto), and the processor 1101 performs at least one of the other steps (for example, step S52, step S54, step S62, step S72, step S81, but not limited thereto).

In some embodiments, the terms interface circuit, interface, transceiving pin, transceiver, etc., may be used interchangeably.

In some embodiments, the chip 1100 further includes one or more memories 1102 for storing instructions. Optionally, all or part of the memory 1102 may be disposed outside the chip 1100.

The present disclosure further provides a storage medium having instructions stored thereon, which, when executed on a communication device 1000, cause the communication device 1000 to perform any of the aforementioned methods. Optionally, the storage medium is an electronic storage medium. Optionally, the storage medium is a computer-readable storage medium, but is not limited thereto, and may also be a storage medium readable by other apparatuses. Optionally, the storage medium may be a non-transitory storage medium, but is not limited thereto, and may also be a transitory storage medium.

The present disclosure further provides a program product which, when executed by the communication device 1000, causes the communication device 1000 to perform any of the aforementioned methods. Optionally, the program product is a computer program product.

The present disclosure further provides a computer program which, when run on a computer, causes the computer to perform any of the aforementioned methods. The above description is merely an illustration of the preferred embodiments of the present disclosure and the technical principles applied. Those skilled in the art should understand that the scope of the disclosure involved in the present disclosure is not limited to the technical solutions formed by the specific combination of the above technical features, and should also cover other technical solutions formed by any combination of the above technical features or their equivalent features without departing from the above disclosed concept. For example, technical solutions formed by replacing the above features with technical features disclosed in the present disclosure (but not limited thereto) that have similar functions.

## Claims

1. A sensing measurement method, comprising:
determining and sending a sensing polling trigger frame during a polling phase; and
if a CTS-to-self frame sent by a sensing by proxy initiator is not received, proceeding to perform a trigger-based sensing measurement.

2. The method according to claim 1, wherein the trigger-based sensing measurement comprises at least one of a null data packet announcement (NDPA) sensing measurement or a trigger frame (TF) sensing measurement.

3. The method according to claim 1, further comprising:
after completing the trigger-based sensing measurement, sending a first wireless frame to the sensing by proxy initiator, wherein the first wireless frame is used to request sending a sensing by proxy report frame;
if the CTS-to-self frame sent by the sensing by proxy initiator is not received, not sending the sensing by proxy report frame to the sensing by proxy initiator;
if the CTS-to-self frame sent by the sensing by proxy initiator is received, sending the sensing by proxy report frame to the sensing by proxy initiator.

4. The method according to claim 3, wherein when the trigger-based sensing measurement comprises the NDPA sensing measurement, the first wireless frame is a reporting trigger frame; when the trigger-based sensing measurement comprises the TF sensing measurement, the first wireless frame is a sensing polling trigger frame or a request to send frame.

5. The method according to claim 1 or 4, wherein the sensing polling trigger frame comprises at least one of:
a device identifier of the sensing by proxy initiator; and
an uplink resource unit for sending the CTS-to-self frame.

6. The method according to claim 3 or 4, further comprising:
sending a sensing by proxy termination frame to the sensing by proxy initiator in a case that the sensing by proxy report frame is not sent to the sensing by proxy initiator.

7. The method according to claim 3, wherein the reporting trigger frame comprises a device identifier of the sensing by proxy initiator.

8. A sensing measurement method, comprising:
if a first wireless frame sent by a sensing by proxy responder is received, determining whether to receive a sensing by proxy report frame sent by the sensing by proxy responder, wherein the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by a sensing by proxy initiator during a sensing polling phase.

9. The method according to claim 8, further comprising:
when determining to receive the sensing by proxy report frame, sending the CTS-to-self frame to the sensing by proxy responder and receiving the sensing by proxy report frame sent by the sensing by proxy responder.

10. The method according to claim 8, wherein the trigger-based sensing measurement comprises at least one of a null data packet announcement (NDPA) sensing measurement or a trigger frame (TF) sensing measurement.

11. The method according to claim 10, wherein when the trigger-based sensing measurement comprises the NDPA sensing measurement, the first wireless frame is a reporting trigger frame; when the trigger-based sensing measurement comprises the TF sensing measurement, the first wireless frame is a sensing polling trigger frame or a request to send frame.

12. The method according to claim 11, wherein the sensing polling trigger frame comprises at least one of:
a device identifier of the sensing by proxy initiator; and
an uplink resource unit for sending the CTS-to-self frame.

13. The method according to claim 8, further comprising:
receiving a sensing by proxy termination frame sent by the sensing by proxy responder when the sensing by proxy responder determines not to send the sensing by proxy report frame.

14. The method according to claim 11, wherein the reporting trigger frame comprises a device identifier of the sensing by proxy initiator.

15. A sensing by proxy responder, comprising:
a transceiver module, configured to determine and send a sensing polling trigger frame during a polling phase; and
a processing module, configured to proceed to perform a trigger-based sensing measurement if a CTS-to-self frame sent by a sensing by proxy initiator is not received.

16. A sensing by proxy initiator, comprising:
a processing module, configured to determine whether to receive a sensing by proxy report frame sent by a sensing by proxy responder if a first wireless frame sent by the sensing by proxy responder is received, wherein the first wireless frame is used to request sending the sensing by proxy report frame, and the first wireless frame is sent by the sensing by proxy responder after performing a trigger-based sensing measurement in a case that the sensing by proxy responder does not receive a CTS-to-self frame sent by the sensing by proxy initiator during a sensing polling phase.

17. A sensing by proxy responder, comprising:
one or more processors;
wherein the sensing by proxy responder is configured to perform the sensing measurement method according to any one of claims 1-7.

18. A sensing by proxy initiator, comprising:
one or more processors;
wherein the sensing by proxy initiator is configured to perform the sensing measurement method according to any one of claims 8-14.

19. A communication system, comprising a sensing by proxy initiator and a sensing by proxy responder, wherein the sensing by proxy responder is configured to implement the communication method according to any one of claims 1-7, and the sensing by proxy initiator is configured to implement the communication method according to any one of claims 8-14.

20. A storage medium, wherein the storage medium stores instructions, and the instructions, when run on a communication device, cause the communication device to perform the sensing measurement method according to any one of claims 1-7 or claims 8-14.
